(19) Europäisches Patentamt
European Patent Office
Office européen des brevets

(11) **EP 3 943 569 A1**

## (12) EUROPEAN PATENT APPLICATION
published in accordance with Art. 153(4) EPC

(43) Date of publication:
**26.01.2022 Bulletin 2022/04**

(21) Application number: **20774746.0**

(22) Date of filing: **05.03.2020**

(51) International Patent Classification (IPC):
*C09K 3/10* (2006.01)     *H01G 11/78* (2013.01)
*H01G 11/80* (2013.01)     *H01M 2/08* (2006.01)

(52) Cooperative Patent Classification (CPC):
**C09K 3/10; H01G 11/78; H01G 11/80;
H01M 50/183; Y02E 60/10**

(86) International application number:
**PCT/JP2020/009432**

(87) International publication number:
**WO 2020/189305 (24.09.2020 Gazette 2020/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.03.2019   JP 2019053493**

(71) Applicant: **Zeon Corporation
Tokyo 100-8246 (JP)**

(72) Inventor: **MAEDA, Kouichirou
Tokyo 100-8246 (JP)**

(74) Representative: **Fujimoto, Naho
Maiwald Patentanwalts- und
Rechtsanwaltsgesellschaft mbH
Elisenhof
Elisenstraße 3
80335 München (DE)**

## (54) SEALING AGENT FOR ELECTROCHEMICAL DEVICE AND SEALING AGENT COMPOSITION

(57) A sealant for an electrochemical device contains (A) a conjugated diene polymer and (B) a polyisobutylene polymer. The sealant contains the (A) conjugated diene polymer in a proportion of more than 80 mass% and not more than 98 mass% and the (B) polyisobutylene polymer in a proportion of not less than 2 mass% and less than 20 mass% relative to the total mass of the (A) conjugated diene polymer and the (B) polyisobutylene polymer.

EP 3 943 569 A1

**Description**

TECHNICAL FIELD

The present disclosure relates to a sealant for an electrochemical device that can be used in an electrochemical device in which an electrolyte solution is used, such as in a lithium ion battery, and also relates to a sealant composition for an electrochemical device in which this sealant is used.

BACKGROUND

Examples of electrochemical devices in which electrolyte solutions are used include electric double-layer capacitors, lithium ion batteries, and so forth. In such electrochemical devices, it is necessary to prevent evaporation and leakage of electrolyte solution sealed therein and also to prevent infiltration of undesirable substances from outside of the electrochemical device. For this reason, sealants are widely used in electrochemical devices.

A sealant for a secondary battery that contains a polymer including an isobutylene block and a styrene block and a diene rubber in a specific mass ratio has previously been proposed as a sealant for a secondary battery (for example, refer to Patent Literature (PTL) 1). In a sealant for a secondary battery disclosed by PTL 1, the mass ratio of the diene rubber and the polymer described above is 40/60 to 80/20 in terms of diene rubber/polymer. This sealant for a secondary battery makes it possible to form a sealant layer having excellent water resistance, humidity resistance, and heat resistance.

CITATION LIST

Patent Literature

PTL 1: JP2014-56675A

SUMMARY

(Technical Problem)

In a situation in which a sealant is adopted in an electrochemical device and is caused to display sealing ability, this may be achieved by forming a sealant layer that is a layer formed of the sealant. Formation of a sealant layer is typically carried out by applying a sealant composition containing a sealant onto a target for application of the sealant (hereinafter, also referred to simply as an "application target") to form a coating film, and then drying the coating film to form a sealant layer. Examples of application methods that may be adopted include a method in which the application target and the sealant composition are loaded into a drum and then the drum is rotated to form a coating film on the surface of the application target and a method in which the sealant composition is applied onto the surface of the application target using a dispenser to form a coating film. In the former of these methods (i.e., the application method using a drum), scratches may easily arise in the coating film that is formed. When scratches are present in the coating film, these scratches remain in the sealant layer formed through drying of the coating film, and, as a consequence, it may not be possible to achieve adequate close adherence between the sealant layer and an adherend with respect to which the sealant layer is intended to closely adhere and display sealing ability. Moreover, in the application method using a drum, there are instances in which a coating film is also formed at an undesired position at the surface of an application target.

On the other hand, the latter of the aforementioned methods (i.e., the application method using a dispenser) is advantageous in terms that a coating film can be formed in just a desired region at the surface of an application target and the obtained coating film has a smooth surface. However, the application method using a dispenser requires a long time for a step of drying the coating film, in particular, compared to the application method using a drum, and leaves room for improvement in terms of production efficiency. One strategy for improving production efficiency involves using a high-concentration sealant composition in order to reduce the amount of solvent that needs to be removed during drying of the coating film and shorten the time required for a step of drying the coating film. However, increasing the concentration of a sealant composition to a high concentration tends to increase an attribute of thread forming (i.e., thread forming ability (drawability)) of the sealant composition. A sealant composition having high thread forming ability may be difficult to handle when used in the application method using a dispenser, and thus may not enable a sufficient increase of production efficiency.

Particularly with regards to a conventional sealant containing a diene rubber such as the sealant for a secondary battery proposed in PTL 1, there is room for improvement of a sealant composition obtained using the sealant in terms of achieving a balance of both increasing the concentration of the composition and suppressing thread forming ability. There is also room for further improvement of the sealant for a secondary battery proposed in PTL 1 in terms of close adherence between an adherend and a sealant layer that is formed using a composition containing the sealant.

Accordingly, one object of the present disclosure, in view of the situation described above, is to provide a sealant with which it is possible to produce a sealant composition that has low thread forming ability and that can form a sealant layer having excellent close adherence with an adherend.

Another object of the present disclosure is to provide a high-concentration sealant composition that has low thread forming ability and that can form a sealant layer having excellent close adherence with an adherend.

(Solution to Problem)

The inventor conducted diligent investigation with the aim of solving the problems set forth above. The inventor reached a new finding that by compounding a specific amount of a polyisobutylene polymer in a sealant having a diene rubber (i.e., a conjugated diene polymer) as a main component, (1) an excessive increase of thread forming ability can be inhibited even when the sealant is used to produce a high-concentration sealant composition, and (2) a sealant layer formed using an obtained sealant composition has excellent close adherence with an adherend. In this manner, the inventor completed the present disclosure.

Specifically, the present disclosure aims to advantageously solve the problems set forth above, and a presently disclosed sealant for an electrochemical device comprises: (A) a conjugated diene polymer; and (B) a polyisobutylene polymer, wherein the (A) conjugated diene polymer is contained in a proportion of more than 80 mass% and not more than 98 mass% and the (B) polyisobutylene polymer is contained in a proportion of not less than 2 mass% and less than 20 mass% relative to total mass of the (A) conjugated diene polymer and the (B) polyisobutylene polymer. When a sealant for an electrochemical device contains (A) a conjugated diene polymer in a proportion of more than 80 mass% and not more than 98 mass% and (B) a polyisobutylene polymer in a proportion of not less than 2 mass% and less than 20 mass%, it is possible to produce a sealant composition that has low thread forming ability and that can form a sealant layer having excellent close adherence with an adherend.

It is preferable that the presently disclosed sealant for an electrochemical device further comprises (C) a colorant, wherein the (C) colorant is contained in a proportion of not less than 1 mass% and not more than 10 mass% relative to total mass of the (A) conjugated diene polymer and the (B) polyisobutylene polymer. When the content of the (C) colorant in the sealant for an electrochemical device is within the range set forth above, it is possible to increase visibility when the sealant for an electrochemical device is applied onto an adherend and also to further increase close adherence between an obtained sealant layer and the adherend.

In the presently disclosed sealant for an electrochemical device, the (B) polyisobutylene polymer preferably has a viscosity of 1,000 mPa·s or less when used to produce a xylene solution having a concentration of 10 mass%. When the (B) polyisobutylene polymer contained in the sealant for an electrochemical device has a viscosity of 1,000 mPa·s or less as measured under specific conditions, it is possible to obtain a sealant composition having even lower thread forming ability. Note that the "viscosity" referred to above can be measured by a method described in the EXAMPLES section.

Moreover, the present disclosure aims to advantageously solve the problems set forth above, and a presently disclosed sealant composition for an electrochemical device comprises: an organic solvent; and any one of the sealants for an electrochemical device set forth above, wherein the sealant composition for an electrochemical device has a polymer concentration $C^P$ of not less than 10 mass% and not more than 20 mass% as calculated by a formula: $C^P = W^{(A+B)}/(W^S + W^{(A+B)}) \times 100$, where mass of the organic solvent is taken to be $W^S$ and total mass of the (A) conjugated diene polymer and the (B) polyisobutylene polymer is taken to be $W^{(A+B)}$. By compounding the presently disclosed sealant for an electrochemical device such as to give a polymer concentration $C^P$ of not less than 10 mass% and not more than 20 mass% in production of a sealant composition for an electrochemical device, it is possible to provide a high-concentration sealant composition that has low thread forming ability and that can form a sealant layer having excellent close adherence with an adherend.

(Advantageous Effect)

According to the present disclosure, it is possible to provide a sealant with which it is possible to produce a sealant composition that has low thread forming ability and that can form a sealant layer having excellent close adherence with an adherend.

Moreover, according to the present disclosure, it is possible to provide a high-concentration sealant composition that has low thread forming ability and that can form a sealant layer having excellent close adherence with an adherend.

DETAILED DESCRIPTION

The following provides a detailed description of embodiments of the present disclosure.

The presently disclosed sealant for an electrochemical device can suitably be used in an application of sealing an electrochemical device. In particular, the presently disclosed sealant for an electrochemical device can suitably be used in sealing of an electrochemical device that contains an electrolyte solution containing an organic solvent (hereinafter, referred to as a "non-aqueous electrolyte solution"). Moreover, the presently disclosed sealant for an electrochemical device can suitably be used to produce the presently disclosed sealant composition for an electrochemical device by dissolving the presently disclosed sealant for an electrochemical device in an organic solvent in a mixing ratio such that a specific polymer concentration is satisfied.

(Sealant for electrochemical device)

The presently disclosed sealant for an electrochemical device (hereinafter, also referred to simply as the "presently disclosed sealant" or "sealant") contains (A) a conjugated diene polymer and (B) a polyisobutylene polymer. A feature of the presently disclosed sealant is that the presently disclosed sealant contains the (A) conjugated diene polymer in a proportion of more than 80 mass% and not more than 98 mass% and the (B) polyisobutylene polymer in a proportion of not less than 2 mass% and less than 20 mass% relative to the total mass of the (A) conjugated diene polymer and the (B) polyisobutylene polymer. As a result of containing the (A) conjugated diene polymer as a main component and further containing the (B) polyisobutylene polymer in a proportion of not less than 2 mass% and less than 20 mass%, the presently disclosed sealant can be used to produce a sealant composition that has low thread forming ability and that can form a sealant layer having excellent close adherence with an adherend. The presently disclosed sealant preferably further contains (C) a colorant and may optionally contain various other compounding agents.

<(A) Conjugated diene polymer>

The presently disclosed sealant contains (A) a conjugated diene polymer. The (A) conjugated diene polymer is a polymer that is obtained through polymerization of a conjugated diene compound. Specific examples of the conjugated diene compound include, but are not specifically limited to, 1,3-butadiene, isoprene, 2,3-dimethyl-1,3-butadiene, 1,3-pentadiene, 2-methyl-1,3-pentadiene, 1,3-hexadiene, and 4,5-dimethyl-1,3-octadiene. One of these conjugated diene compounds may be used individually, or two or more of these conjugated diene compounds may be used in combination. Of these conjugated diene compounds, 1,3-butadiene and isoprene are particularly preferable.

It should be noted that the (A) conjugated diene polymer may be a polymer that is obtained through polymerization of only a conjugated diene compound or may be a copolymer of a conjugated diene compound and a compound other than the conjugated diene compound that is copolymerizable with the conjugated diene compound (however, a compound corresponding to the (B) polyisobutylene polymer described further below is excluded). Of such polymers, a polymer that is obtained through polymerization of only a conjugated diene compound is preferable as the (A) conjugated diene polymer.

The molecular weight of the (A) conjugated diene polymer, in terms of weight-average molecular weight (Mw), is preferably not less than 100,000 and not more than 1,000,000. Note that the "weight-average molecular weight (Mw)" can be determined as a polystyrene-equivalent value by GPC (Gel Permeation Chromatography).

No specific limitations are placed on the method by which the (A) conjugated diene polymer is produced. The method of polymerization may, for example, be emulsion polymerization or solution polymerization. Moreover, the polymerization reaction may, for example, be radical polymerization, anionic polymerization, or the like. Of these examples, solution polymerization using radical polymerization is preferable.

The polymerization can be performed in the presence of a polymerization initiator in a temperature range of normally 0°C or higher, preferably 10°C or higher, and more preferably 20°C or higher, and of normally 150°C or lower, preferably 100°C or lower, and more preferably 80°C or lower.

<(B) Polyisobutylene polymer>

The presently disclosed sealant contains (B) a polyisobutylene polymer in addition to the (A) conjugated diene polymer described above. The (B) polyisobutylene polymer may be a homopolymer of isobutylene, a copolymer of isobutylene and isoprene (for example, butyl rubber), or a block copolymer including an isobutylene block and a styrene block. One of these polymers may be used individually, or a plurality of these polymers may be used in combination. Of these polymers, a copolymer of isobutylene and isoprene (for example, butyl rubber) or a block copolymer including an isobutylene block and a styrene block is preferable as the (B) polyisobutylene polymer from a viewpoint that a sealant layer having even better close adherence with an adherend can be formed.

The copolymer of isobutylene and isoprene that may be used as the (B) polyisobutylene polymer can be a copolymer of isobutylene and isoprene that includes monomer units derived from isoprene in a proportion of preferably 0.5 mol% or more, and more preferably 0.8 mol% or more, and in a proportion of preferably 15.0 mol% or less, and more preferably 5.0 mol% or less. When the proportion in which isoprene-derived monomer units are included in the copolymer of isobutylene and isoprene is not more than any of the upper limits set forth above, thread forming ability of an obtained sealant composition can be further reduced, and a sealant layer having even better close adherence with an adherend can be formed. Note that the proportional content of a given monomer unit in a polymer can be measured by $^1$H-NMR.

The block copolymer including an isobutylene block and a styrene block that may be used as the (B) polyisobutylene polymer can be a block copolymer obtained through copolymerization of a monomer composition containing isobutylene monomer and styrene monomer, but is not specifically limited thereto.

The block copolymer may have any configuration without any specific limitations and may be an [(A)-(B)] type diblock copolymer, an [(A)-(B)-(A)] type triblock copolymer, a block copolymer having an equal or larger number of blocks, or the like. Of these examples, a styrene-isobutylene-styrene (SIBS) triblock copolymer is preferable as a block copolymer used as the (B) polyisobutylene polymer. This is because thread forming ability of an obtained sealant composition can be further reduced, and a sealant layer having even better close adherence with an adherend can be formed. SIBSTAR® (SIBSTAR is a registered trademark in Japan, other countries, or both; produced by Kaneka Corporation) is preferably used as this SIBS triblock copolymer.

The proportional content of styrene units in the block copolymer is preferably 70 mol% or less, and more preferably 50 mol% or less from a viewpoint of further reducing thread forming ability of an obtained sealant composition and enabling formation of a sealant layer having even better close adherence with an adherend.

When the (B) polyisobutylene polymer is used to produce a xylene solution having a concentration of 10 mass%, the viscosity thereof is preferably 1,000 mPa·s or less, and more preferably 800 mPa·s or less, and is preferably 5 mPa·s or more. When the "viscosity" of the (B) polyisobutylene polymer is not more than any of the upper limits set forth above, thread forming ability of an obtained sealant composition can be further reduced. Moreover, when the "viscosity" of the (B) polyisobutylene polymer is not less than the lower limit set forth above, coatability of an obtained sealant composition can be increased.

<Proportional content of (A) conjugated diene polymer and (B) polyisobutylene polymer>

The presently disclosed sealant contains the (A) conjugated diene polymer in a proportion of more than 80 mass% and not more than 98 mass% and the (B) polyisobutylene polymer in a proportion of not less than 2 mass% and less than 20 mass% relative to the total mass of the (A) conjugated diene polymer and the (B) polyisobutylene polymer. When the proportion constituted by the (B) polyisobutylene polymer is 2 mass% or more, it is possible to prevent an obtained sealant composition from having high thread forming ability. Moreover, when the proportion constituted by the (A) conjugated diene polymer is more than 80 mass%, it is possible to form a sealant layer having excellent close adherence with an adherend, and particularly with an adherend formed of a metal material. The proportion constituted by the (B) polyisobutylene polymer is preferably 4 mass% or more, and more preferably 7 mass% or more from a viewpoint of further reducing thread forming ability of an obtained sealant composition. Moreover, the proportion constituted by the (B) polyisobutylene polymer is preferably 16 mass% or less, and more preferably 11 mass% or less from a viewpoint of even further increasing close adherence with an adherend.

<(C) Colorant>

The presently disclosed sealant preferably contains (C) a colorant. The inclusion of the (C) colorant in the sealant makes it possible for the state of coating when the sealant composition is applied onto an adherend to be judged by inspection of external appearance. In other words, it is possible to analyze the external appearance of the coating surface and inspect whether the coating state is uniform and whether there is unevenness of coating. The colorant preferably does not react with an electrolyte solution or dissolve in the electrolyte solution, and may be any of various organic or inorganic pigments. Of such pigments, carbon-based pigments such as carbon black and graphite can suitably be used. This is because the coating state is easy to judge based on the external appearance of an obtained coating surface, and particularly based on the brightness thereof, in a case in which a carbon-based pigment is compounded in the sealant. Specific examples of carbon black include furnace black, channel black, and so forth. Specific examples of graphite include artificial graphite, natural flake graphite, and so forth. One of these pigments may be used individually, or two or more of these pigments may be used in combination. Of carbon-based pigments, carbon black is preferably used. The primary particle diameter of the carbon black is preferably 100 nm or less. Note that the primary particle diameter of the carbon black is the volume-average particle diameter D50 of primary particles of the carbon black (i.e., particles forming aggregates in a case in which the carbon black is in the form of aggregates). The volume-average particle diameter D50 is the particle diameter corresponding to a cumulative value of 50% from the small diameter end in a cumulative particle diameter distribution, by volume, according to laser diffraction/scattering particle size distribution measurement, which can be measured in accordance with JIS Z 8825:2013.

The proportional content of the (C) colorant in the presently disclosed sealant relative to the total mass of the (A) conjugated diene polymer and the (B) polyisobutylene polymer is preferably 1 mass% or more, and more preferably 2 mass% or more, and is preferably 10 mass% or less, and more preferably 7 mass% or less. When the content of the (C) colorant in the sealant is not less than any of the lower limits set forth above, it is possible to increase visibility when the sealant for an electrochemical device is applied onto an adherend. Moreover, when the content of the (C) colorant in the sealant is not more than any of the upper limits set forth above, close adherence between an obtained sealant layer and an adherend can be further increased. Particularly in a case in which a carbon-based pigment is adopted as the (C) colorant, electrical insulation of the sealant can be increased through the content of the (C) colorant in the sealant being not more than any of the upper limits set forth above.

<Various compounding agents>

Besides the (A) conjugated diene polymer, the (B) polyisobutylene polymer, and the (C) colorant that is used as necessary, the presently disclosed sealant can optionally contain various compounding agents such as stabilizers, dispersants, and ultraviolet absorbers that are typically used in the resin industry.

Among compounding agents that are optional components, specific examples of stabilizers include phenolic antioxidants, phosphoric antioxidants, sulfuric antioxidants, and so forth. Of these stabilizers, phenolic antioxidants are preferable, and alkyl-substituted phenolic antioxidants are particularly preferable. These stabilizers may be used individually or as a combination of two or more types. The proportional content of a stabilizer in the sealant is selected as appropriate depending on the objective of use and may be not less than 0.001 mass% and not more than 10 mass% when the total mass of the (A) conjugated diene polymer and the (B) polyisobutylene polymer is taken to be 100 mass%.

The presently disclosed sealant can be produced by mixing the above-described (A) conjugated diene polymer and (B) polyisobutylene polymer with the (C) colorant and various compounding agents that are optionally used by a known method. Also note that the various components described above may be added to an organic solvent and then dissolved or dispersed therein so as to directly produce a sealant composition without producing a sealant.

(Sealant composition)

The presently disclosed sealant composition contains: an organic solvent; and the presently disclosed sealant containing the (A) conjugated diene polymer, the (B) polyisobutylene polymer, and the (C) colorant, various compounding agents, and so forth that are used as necessary. In particular, a feature of the presently disclosed sealant composition is that the sealant composition for an electrochemical device has a polymer concentration $C^P$ of not less than 10 mass% and not more than 20 mass% as calculated by a formula: $C^P = W^{(A+B)}/(W^S + W^{(A+B)}) \times 100$, where the mass of the organic solvent is taken to be $W^S$ and the total mass of the (A) conjugated diene polymer and the (B) polyisobutylene polymer is taken to be $W^{(A+B)}$. The presently disclosed sealant composition has high concentration while also having low thread forming ability and can form a sealant layer having excellent close adherence with an adherend.

In more detail, the (A) conjugated diene polymer and the (B) polyisobutylene polymer are dissolved in the organic solvent in the presently disclosed sealant composition, and the polymer concentration $C^P$, which corresponds to the dissolved concentration of the (A) and (B) polymers, is not less than 10 mass% and not more than 20 mass%.

The polymer concentration $C^P$ is required to be not less than 10 mass% and not more than 20 mass% as previously described, is preferably 12 mass% or more, and is preferably 18 mass% or less, and more preferably 16 mass% or less. Through the polymer concentration $C^P$ being not more than the upper limit of any of the ranges set forth above, it is possible to inhibit the occurrence of a phenomenon in which the viscosity of the sealant composition becomes excessively high, resulting in non-uniform thickness of a coating film. Moreover, through the polymer concentration $C^P$ being not less than the lower limit of any of the ranges set forth above, a coating film formed using the sealant composition can be prevented from becoming excessively thin.

The organic solvent that is used in the sealant composition is an organic solvent in which the polymer components (more specifically, the (A) conjugated diene polymer and (B) polyisobutylene polymer) of the sealant can dissolve at normal temperature or under heating and is not limited to a specific organic solvent. Specific examples of the organic solvent include aromatic hydrocarbon compounds such as benzene, toluene, and xylene; saturated aliphatic and alicyclic hydrocarbon compounds such as n-hexane, cyclohexane, methylcyclohexane, ethylcyclohexane, nonane, decane, decalin, tetralin, and dodecane; and hydrocarbon mixtures such as gasoline and industrial gasoline.

No specific limitations are placed on the method by which the sealant composition is produced. For example, the sealant composition can be produced by the following procedure. First, the polymer components (more specifically, the (A) conjugated diene polymer and (B) polyisobutylene polymer) are dissolved in the organic solvent and then undissolved material is removed by a filter or the like, as necessary, to obtain a solution. Specific examples of filters that may be used to remove undissolved material include filters obtained through weaving of filiform fiber, metal, or the like into a reticulated form and filters obtained through perforation of fine holes in a planar material. Next, the (C) colorant is dispersed in the obtained solution as necessary, and various compounding agents are further dissolved or dispersed as necessary. Defoaming may also be performed as necessary to remove bubbles contained in the solution. Examples of defoaming methods that may be adopted include vacuum defoaming and ultrasonic defoaming.

<Formation of sealant layer>

The following describes one example of a procedure used in formation of a sealant layer using the presently disclosed sealant composition. The following description relates to the formation of a sealant layer in production of, from among electrochemical devices, a cylindrical lithium ion battery in which a non-aqueous electrolyte solution is used. In a cylindrical lithium ion battery according to one example, a ring-shaped, electrically insulating gasket that is formed of a resin material is provided in-between a battery lid and a battery can (hereinafter, referred to as a "metal container") formed of a metal material in order to seal the battery.

First, a specific amount of the presently disclosed sealant composition set forth above is fed and applied onto either or both of an inner wall surface of the metal container and a surface of the insulating gasket using a metering pump such as an air-driven metering dispenser, roller pump, or gear pump. After this application, the sealant composition is naturally dried while maintaining a horizontal state to prevent non-uniform coating of the sealant composition, and thus the organic solvent is removed to form a thin layer. The insulating gasket is preferably formed of a highly polar resin such as a TPC (ThermoPlastic Copolyester).

Note that the application is not limited to being performed by a method using a metering pump and may be carried out by hand using a brush so long as the amount is small. Moreover, the drying may alternatively be forced drying using a heating device instead of natural drying. This enables drying in a shorter time and thus provides a process that is more industrially appropriate.

In a case in which a heating device is used, drying is normally performed at a temperature of approximately 30°C to 150°C for a drying time of approximately 5 minutes to 180 minutes to remove the organic solvent from the coating film and obtain a sealant layer. The residual concentration of the organic solvent in the sealant layer is preferably adjusted to 5 mass% or less, more preferably 2 mass% or less, even more preferably 1 mass% or less, and particularly preferably 0.5 mass% or less through removal of the organic solvent by drying. In a situation in which the drying temperature of the organic solvent exceeds or is around the boiling point of the organic solvent, surface unevenness may arise as a result of foaming occurring. Therefore, it is preferable that the drying temperature is set in accordance with properties of the organic solvent. The drying temperature is, as a rough guide, preferably set as a temperature at least 5°C lower than the boiling point of the organic solvent, and more preferably at least 10°C lower than the boiling point of the organic solvent, and the sealant composition is normally dried within a temperature range of not lower than 30°C and not higher than 150°C while also taking into account the boiling point of the organic solvent.

The thickness of the sealant layer formed by the method described above may be freely selected based on the size of the metal container, the insulating gasket, and so forth, and is normally not less than 0.1 $\mu$m and not more than 100 $\mu$m. The ease of formation of the sealant layer is increased through the thickness of the sealant layer being not more than the upper limit of the range set forth above. Moreover, problems of leakage of electrolyte solution and infiltration of moisture can be inhibited and the sealant layer can be prevented from easily severing through the thickness of the sealant layer being not less than the lower limit of the range set forth above.

EXAMPLES

The following describes the present disclosure through examples. However, the present disclosure is not limited to these examples. Note that "parts" and "%" in the present examples are by mass, unless otherwise specified. In the examples and comparative examples, measurement of the viscosity of (B) a polyisobutylene polymer, evaluation of thread forming ability, and evaluation of close adherence (peel strength) were performed as described below. Moreover, each (A) conjugated diene polymer used in the examples and comparative examples was polymerized as described below in Polymerization Example 1 or Polymerization Example 2.

<Measurement of viscosity of (B) polyisobutylene polymer>

For each (B) polyisobutylene polymer (BUTYL 365 and SIBSTAR® 062H) used in the examples and comparative examples, the (B) polyisobutylene polymer was dissolved in xylene with a concentration of 10 mass% at 25°C, and then the viscosity thereof was measured under stirring with a shear rate of 100/s using a rheometer (MCR302 produced by Anton Paar GmbH). The results are shown in Table 1.

<Thread forming ability>

A sealant composition obtained in each example or comparative example was loaded into a 50 mL beaker such as to fill up to a height of 10 mm. A round bar made of SUS (Steel Use Stainless) that had a diameter of 1 mm was placed into the beaker such that it was oriented perpendicularly to the base of the beaker and was then pulled upward at a speed of 60 mm/min after coming into contact with the base of the beaker. The distance from the surface of the sealant composition inside the beaker to a lower end of the round bar at the point at which a thread-like liquid drawn from the end of the round bar severed was taken to be the thread drawing length. A longer thread drawing length indicates higher thread forming ability, whereas a shorter thread drawing length indicates lower thread forming ability.

<Close adherence (peel strength)>

A sealant composition obtained in each example or comparative example was cast onto each of a polypropylene plate (hereinafter, PP plate) of 2 mm in thickness and a Ni-plated SUS plate (hereinafter, SUS plate) of 0.3 mm in thickness by doctor blading with a gap of 200 $\mu$m so as to obtain a coating film. Each of the obtained coating films was dried under heating at 80°C for 60 minutes to form a film (i.e., a sealant layer) on each of the PP plate and the SUS plate, and thereby obtain test specimens. Next, the peel strength of each of these test specimens was measured by a 90° peeling method. Specifically, aluminum tape of 10 mm in width that included a pressure-sensitive adhesive was placed on the surface at the sealant layer-side of each of the test specimens and was affixed to the test specimen by passing a 2 kg roller back and forth twice. Next, an end of the aluminum tape was gripped, and a tensile tester was used to measure the peel strength. Note that the adhesive strength of the pressure-sensitive adhesive of the aluminum tape was stronger than the adhesive strength of the sealant layer and that peeling did not occur at the interface of the sealant layer and a layer of the pressure-sensitive adhesive that had been provided on the aluminum tape in advance. As a result of this testing, peeling occurred at the interface of the substrate (PP plate or SUS plate) having the sealant layer (film) formed at the surface thereof and the sealant layer (film) in Comparative Examples 2 to 4, and thus the peel strength during this interfacial peeling was measured. On the other hand, material breakdown occurred in the sealant layer during peeling in Examples 1 to 4 and Comparative Example 1. Accordingly, peel strength during peeling accompanying material breakdown was measured in Examples 1 to 4 and Comparative Example 1. Note that in the "Peeling pattern" row provided in Table 1, "B" denotes that interfacial peeling occurred and "A" denotes that material breakdown occurred. In general, a case in which material breakdown occurs indicates higher adhesive strength between the adherend (PP plate or SUS plate) and the sealant layer and better close adherence than a case in which interfacial peeling occurs. Moreover, among cases in which the peeling pattern is the same, a larger value for the peel strength indicates better close adherence. Note that the value (N) for the "Peel strength" indicated in Table 1 is the value of the load required to peel the aluminum tape having a width of 10 mm.

<Polymerization Example 1: Conjugated diene polymer (A-1)>

A 10 L autoclave equipped with a stirrer was charged with 5,000 g of toluene and 810 g of butadiene and these materials were sufficiently stirred. Thereafter, 0.27 mol of diethylaluminum chloride and 0.6 mmol of chromium chloride-pyridine complex were added and polymerization was carried out for 3 hours under stirring at 60°C. Polymerization was subsequently terminated through addition of 100 mL of methanol. After termination of polymerization, the polymerization liquid was cooled to room temperature and then removed from the autoclave. The obtained polymerization liquid was subjected to steam coagulation and then vacuum drying at 60°C for 48 hours to yield 780 g of a solid conjugated diene polymer (A-1). The weight-average molecular weight (Mw) of the obtained conjugated diene polymer (A-1) was 390,000.

<Polymerization Example 2: Conjugated diene polymer (A-2)>

A 10 L autoclave equipped with a stirrer was charged with 5,000 g of toluene and 810 g of butadiene and these materials were sufficiently stirred. Thereafter, 0.20 mol of diethylaluminum chloride and 0.6 mmol of chromium chloride-pyridine complex were added and polymerization was carried out for 3 hours under stirring at 60°C. Polymerization was subsequently terminated through addition of 100 mL of methanol. After termination of polymerization, the polymerization liquid was cooled to room temperature and then removed from the autoclave. The obtained polymerization liquid was subjected to steam coagulation and then vacuum drying at 60°C for 48 hours to yield 760 g of a solid conjugated diene polymer (A-2). The weight-average molecular weight (Mw) of the obtained conjugated diene polymer (A-2) was 520,000.

(Example 1)

A homogeneous solution (sealant composition) having a polymer concentration $C^P$ of 15 mass% as determined by the following formula was obtained by mixing 95 parts of the conjugated diene polymer (A-1) obtained in Polymerization Example 1 as (A) a conjugated diene polymer, 5 parts of butyl rubber (BUTYL 365 produced by Japan Butyl Co., Ltd.) as (B) a polyisobutylene polymer, 5 parts of carbon black (furnace black having a primary particle diameter in accordance with JIS Z 8825:2013 of 10 nm) as (C) a colorant, and an appropriate amount of an organic solvent (xylene) under heating at 50°C in a flask equipped with an impeller. The obtained sealant composition was used to perform the various measurements and evaluations described above. The results are shown in Table 1.

$$\text{Polymer concentration } C^P = W^{(A+B)}/(W^S + W^{(A+B)}) \times 100$$

In the preceding formula, $W^S$ represents the mass of the organic solvent and $W^{(A+B)}$ represents the total mass of the (A) conjugated diene polymer and the (B) polyisobutylene polymer.

(Examples 2 to 4 and Comparative Examples 1 to 4)

A homogeneous solution (sealant composition) was obtained in the same way as in Example 1 with the exception that the types and/or amounts of various components were changed as indicated in Table 1, and, in a case in which the polymer concentration $C^P$ was changed, the amount of xylene used as the organic solvent was changed such as to achieve the concentration indicated in Table 1. The obtained sealant composition was used to perform various measurements and evaluations in the same way as in Example 1. The results are shown in Table 1.

Note that a styrene-isobutylene-styrene triblock copolymer (SIBS) used as the (B) polyisobutylene polymer compounded in Example 2 and Comparative Examples 3 and 4 was a block copolymer (SIBSTAR® 062H produced by Kaneka Corporation; SIBS triblock copolymer) that included an isobutylene block and styrene blocks.

In Table 1, "PP" indicates polypropylene plate, "Ni" indicates Ni-plated SUS plate, and "SIBS" indicates styrene-isobutylene-styrene triblock copolymer.

Table 1

| | | | Example 1 | Example 2 | Example 3 | Example 4 | Comparative Example 1 | Comparative Example 2 | Comparative Example 3 | Comparative Example 4 |
|---|---|---|---|---|---|---|---|---|---|---|
| (A) Conjugated diene polymer | A-1 (Mw: 390,000) | Parts by mass | 95 | 90 | - | 85 | 100 | 70 | 50 | - |
| | A-2 (Mw: 520,000) | Parts by mass | - | - | 90 | - | - | - | 20 | 70 |
| (B) Polyisobutylene polymer | Butyl rubber | Parts by mass | 5 | - | 10 | 15 | - | 30 | - | - |
| | SIBS | Parts by mass | - | 10 | - | - | - | - | 30 | 30 |
| | Viscosity (25°C, 100/s) | mPa·s | 650 | 6.5 | 650 | 650 | - | 650 | 6.5 | 6.5 |
| (C) Colorant | Carbon black | Parts by mass | 5 | 5 | 3 | 5 | 3 | 5 | 3 | 5 |
| Polymer concentration $C^P$ | | Mass% | 15 | 15 | 13 | 15 | 15 | 15 | 15 | 13 |
| Evaluation | Thread forming ability | cm | 2 | 1 | 1 | 0.3 | 20< | 0.3 | 0.5 | 0.5 |
| | Close adherence (with PP) | Peel strength [N] | 4.5 | 4.6 | 4.3 | 4.3 | 5.4 | 3.2 | 3.2 | 3.3 |
| | | Peeling pattern [-] | A | A | A | A | A | B | B | B |
| | Close adherence (with Ni) | Peel strength [N] | 5.5 | 5.1 | 5.1 | 5.5 | 5.5 | 3.1 | 3.2 | 3.3 |
| | | Peeling pattern [-] | A | A | A | A | A | B | B | B |

EP 3 943 569 A1

It can be seen from Table 1 that in Examples 1 to 4 in which the used sealant contained (A) a conjugated diene polymer in a proportion of more than 80 mass% and not more than 98 mass% and (B) a polyisobutylene polymer in a proportion of not less than 2 mass% and less than 20 mass% relative to the total mass of the (A) conjugated diene polymer and the (B) polyisobutylene polymer, it was possible to form a sealant layer having excellent close adherence with an adherend and produce a sealant composition having low thread forming ability.

In contrast, it can be seen from Table 1 that high thread forming ability could not be suppressed in Comparative Example 1 in which (B) a polyisobutylene polymer was not compounded. It can also be seen that for Comparative Examples 2 to 4 in which 30 mass% of (B) a polyisobutylene polymer was compounded, interfacial peeling was observed in each thereof during evaluation of close adherence, and a sealant layer having sufficiently good close adherence with an adherend could not be formed.

INDUSTRIAL APPLICABILITY

According to the present disclosure, it is possible to provide a sealant with which it is possible to produce a sealant composition that has low thread forming ability and that can form a sealant layer having excellent close adherence with an adherend.

Moreover, according to the present disclosure, it is possible to provide a high-concentration sealant composition that has low thread forming ability and that can form a sealant layer having excellent close adherence with an adherend.

**Claims**

1. A sealant for an electrochemical device comprising: (A) a conjugated diene polymer; and (B) a polyisobutylene polymer, wherein
   the (A) conjugated diene polymer is contained in a proportion of more than 80 mass% and not more than 98 mass% and the (B) polyisobutylene polymer is contained in a proportion of not less than 2 mass% and less than 20 mass% relative to total mass of the (A) conjugated diene polymer and the (B) polyisobutylene polymer.

2. The sealant for an electrochemical device according to claim 1, further comprising (C) a colorant, wherein the (C) colorant is contained in a proportion of not less than 1 mass% and not more than 10 mass% relative to total mass of the (A) conjugated diene polymer and the (B) polyisobutylene polymer.

3. The sealant for an electrochemical device according to claim 1 or 2, wherein the (B) polyisobutylene polymer has a viscosity of 1,000 mPa·s or less when used to produce a xylene solution having a concentration of 10 mass%.

4. A sealant composition for an electrochemical device comprising: an organic solvent; and the sealant for an electrochemical device according to any one of claims 1 to 3, wherein
   the sealant composition for an electrochemical device has a polymer concentration $C^P$ of not less than 10 mass% and not more than 20 mass% as calculated by a formula: $C^P = W^{(A+B)}/(W^S + W^{(A+B)}) \times 100$, where mass of the organic solvent is taken to be $W^S$ and total mass of the (A) conjugated diene polymer and the (B) polyisobutylene polymer is taken to be $W^{(A+B)}$.

## INTERNATIONAL SEARCH REPORT

| | International application No. |
|---|---|
| | PCT/JP2020/009432 |

**A. CLASSIFICATION OF SUBJECT MATTER**
Int.Cl. C09K3/10(2006.01)i, H01G11/78(2013.01)i, H01G11/80(2013.01)i, H01M2/08(2006.01)i
FI: H01M2/08T, H01G11/80, H01G11/78, C09K3/10Z
According to International Patent Classification (IPC) or to both national classification and IPC

**B. FIELDS SEARCHED**

Minimum documentation searched (classification system followed by classification symbols)
Int.Cl. C09K3/10, H01G11/78, H01G11/80, H01M2/08

Documentation searched other than minimum documentation to the extent that such documents are included in the fields searched
| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2016-35039 A (ASAHI KASEI CHEMICALS CORPORATION) 17.03.2016 (2016-03-17), paragraphs [0010]-[0012], [0075] | 1-2<br>3-4 |
| Y<br>A | JP 2014-56675 A (ZEON CORPORATION) 27.03.2014 (2014-03-27), paragraphs [0026], [0041], [0042] | 1-2<br>3-4 |
| A | JP 52-43502 B2 (SAIDEN CHEMICAL INDUSTRY CO., LTD.) 31.10.1977 (1977-10-31), column 3, lines 5-44 | 1-4 |
| A | JP 58-48353 A (MATSUSHITA ELECTRIC INDUSTRIAL CO., LTD.) 22.03.1983 (1983-03-22), page 2, lower left column, lines 12-18 | 1-4 |

☐ Further documents are listed in the continuation of Box C.  ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 15.05.2020 | 26.05.2020 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

| INTERNATIONAL SEARCH REPORT | International application No. |
| --- | --- |
| Information on patent family members | PCT/JP2020/009432 |

```
JP 2016-35039 A    17.03.2016    (Family: none)

JP 2014-56675 A    27.03.2014    (Family: none)

JP 52-43502 B2     31.10.1977    (Family: none)

JP 58-48353 A      22.03.1983    (Family: none)
```

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014056675 A